# EUROPEAN PATENT APPLICATION

(11) **EP 4 741 147 A1**
(43) Date of publication of application: **13.05.2026**
(21) Application number: 25194335.3
(22) Date of filing: 06.08.2025
(51) Int. Cl.: B29D 30/60, B60C 11/00, B60C 19/08

(54) **TREAD RUBBER FORMING METHOD**

(30) Priority: 08.11.2024 JP 2024196281
(71) Applicant: SUMITOMO RUBBER INDUSTRIES, LTD., Kobe-shi, Hyogo 651-0072 (JP)
(72) Inventor: HASHIMOTO, Yuto, Kobe-shi, 651-0072 (JP); SAKAMOTO, Masayuki, Kobe-shi, 651-0072 (JP); TIFTIKOI, Semih Yucel, Kobe-shi, 651-0072 (JP); SAKIK, Tolga, Kobe-shi, 651-0072 (JP)
(74) Representative: Forresters IP LLP

(57) **Abstract**

A tread rubber forming method comprises the steps of: forming a non-conductive layer 10 by winding a non-conductive first rubber strip 3 around a cylindrical body 2 for plural turns; forming a conductive layer 20 by winding a conductive second rubber strip 4 around the cylindrical body for at least one turn in parallel to the circumferential direction of the cylindrical body; and forming a non-conductive layer 10 by winding the first rubber strip 3 around the cylindrical body for plural turns. When winding the non-conductive rubber strip 3 for each one turn of the plural turns, the first rubber strip 3 is wound in parallel to the circumferential direction to form at least 3/4 portion of the one turn, and wound obliquely to form the remaining portion of the one turn.

## Description

### Technical field

The present invention relates to a method for forming an annular tread rubber.

### Background art

There has been known a method for forming a tread rubber in which a non-conductive rubber strip and a conductive rubber strip are wound around a cylindrical body to form an annular tread rubber (see, Patent Document 1).

### Prior art document

### Patent Documents

Patent Document 1: Japanese Patent Application Publication No. 2021-130222

### Summary of the Invention

### Problems to be solved by the Invention

In the tread rubber forming method of Patent Document 1, a non-conductive layer is formed by winding a non-conductive rubber strip around a cylindrical body in a helical manner, namely, obliquely relative to the circumferential direction of the cylindrical body.

Usually, a tread rubber is designed to have such a contour that the thickness of the tread rubber is varied in the tire axial direction according to the rubber volume distribution in the tire axial direction of the finished tire.
And when the tread rubber having such contour is formed by winding a rubber strip, the traversing speed, namely, the speed of the axial movement of the fed rubber strip has to be changed relative to the rotating cylindrical body.

Generally, it is difficult to wind the rubber strip precisely so as to achieve the tread rubber having the designed intended contour, so the following measures have been required; (1) rotating the cylindrical body at a slow speed; and (2) locating the head of the rubber strip applicator as close as possible to the cylindrical body.

In addition, when the tread rubber is provided with a conductive path (called base pen) made of a conductive rubber compound and used to discharge vehicle's static electricity to the ground, since a conductive rubber strip and a non-conductive rubber strip have to be wound so as to fit the designed intended contour of the tread rubber , the number of factors to be considered when winding two kinds of rubber strips is increased, and controlling the plural applicators becomes more complicated.

On the other hand, it is necessary that, in the ground contacting surface of the tread rubber, the conductive path is exposed to the outside in order to achieve a sufficient discharge effect.
Therefore, when winding a conductive rubber strip constituting the conductive path, the position of the conductive rubber strip has be controlled so that the portion of the conductive path to be exposed in the ground contacting surface does not position within the width of a circumferential groove.

In the method described in Patent Document 1, since the conductive rubber strip is wound in an helical manner, the conductive path is formed obliquely to the circumferential direction, making it difficult to adjust the positional relationship between the conductive path and the circumferential groove.

The present invention was made in view of the above circumstances, and
a primary objective of the present invention is to provide a tread rubber forming method in which a tread rubber can be accurately formed from a non-conductive rubber strip and a conductive rubber strip.

### Means for solving the problems

According to the present invention, a tread rubber forming method is for forming an annular tread rubber and comprises:
a first step of forming a non-conductive layer by winding a non-conductive first rubber strip in the shape of a tape, around a cylindrical body for plural turns;
a second step of forming a conductive layer after the first step by winding a conductive second rubber strip in the shape of a tape, around the cylindrical body for at least one turn, in parallel to the circumferential direction of the cylindrical body so as to overlap a portion of the first rubber strip ; and
a third step of forming a non-conductive layer after the second step by winding a first rubber strip around the cylindrical body for plural turns so as to overlap a portion of the second rubber strip ,
wherein
each of the first step and the third step includes, when making each one turn of the plural turns,
a circumferential winding step in which the first rubber strip is wound in parallel to the circumferential direction of the cylindrical body by at least 3/4 of the one turn to form a circumferential segment constituting a portion of the one turn, and
an oblique winding step in which the first rubber strip is wound obliquely to the circumferential direction of the cylindrical body to form an oblique segment constituting the remaining portion of the one turn.

### Effects of the Invention

In the tread rubber forming method according to the present invention, since the non-conductive rubber strip and the conductive rubber strip are wound in the specific manner as described above, the tread rubber having a conductive path can be formed with precision.

### Brief description of the drawings

FIG. 1 is a schematic cross-sectional view of an example of the tread rubber formed by the tread rubber forming method according to the present invention.
FIG. 2 is a perspective view for explaining a tread rubber forming method as an embodiment of the present invention.
FIG. 3 is a flowchart of the tread rubber forming method of FIG. 2.
FIG. 4 is a perspective view for explaining the first step S1 of FIG. 3.
FIG. 5 is an perspective view for explaining the second step S2 of FIG. 3.
FIG. 6 is an perspective view for explaining the third step S3 of FIG. 3.
FIG. 7 is a schematic development view showing a portion of the tread rubber formed in the first step.
FIG. 8 is a schematic development view showing a portion of the tread rubber formed in the second step, following the portion formed in FIG. 7.
FIG. 9 is a schematic development view showing a portion of the tread rubber formed in the third step , following the portions shown in FIG. 8.
FIG. 10 is a schematic development view showing a modification of the example of the tread rubber shown in FIG. 9.
FIG. 11 is a cross-sectional view showing a modification of the example of the tread rubber shown in FIG. 1.
FIG. 12 is a schematic development view showing a portion of the base tread rubber layer formed in the first step.
FIG. 13 is a schematic development view showing a radially inner portion of the conductive layer formed in the second step, following the portion formed in FIG. 12.
FIG. 14 is a schematic development view showing a portion of the base tread rubber layer formed in the third step , following the radially inner portion shown in FIG. 13.
FIG. 15 is a schematic development view showing a portion of the cap tread rubber layer formed on the radially outside of the portion of the base tread rubber layer formed in the first step, following the portion formed in FIG. 14.
FIG. 16 is a schematic development view showing a radially outer portion of the conductive layer formed in the second step, following the portion formed in FIG. 15.
FIG. 17 is a schematic development view showing a portion of the cap tread rubber layer formed on the radially outside of the base tread rubber layer formed in the third step , following the radially outer portion formed in FIG. 16.
FIG. 18 is an enlarged view showing a portion of the base tread rubber layer in FIG. 14.
FIG. 19 is an enlarged view showing a portion of the cap tread rubber layer in FIG. 17.
FIG. 20 is a schematic development view showing an example of the base tread rubber layer formed by a modified example of the tread rubber forming method 100A as shown in FIGS. 12 to 14.
FIG. 21 is a schematic development view showing a radially outer portion of the conductive layer formed in the second step, following the base tread rubber layer formed in FIG. 20.

### Detailed description of the Invention

Embodiments of the present invention will now be described in detail in conjunction with the accompanying drawings.

The drawings may contain exaggerations and dimensional ratios different from the actual ratios in order to aid the understanding of the present invention.

For the different embodiments, the same reference numerals are given to the same or common elements, and duplicate explanations are omitted.

The specific configurations illustrated in the embodiments and the drawings are for understanding the present invention, and the present invention is not limited to such specific configurations.

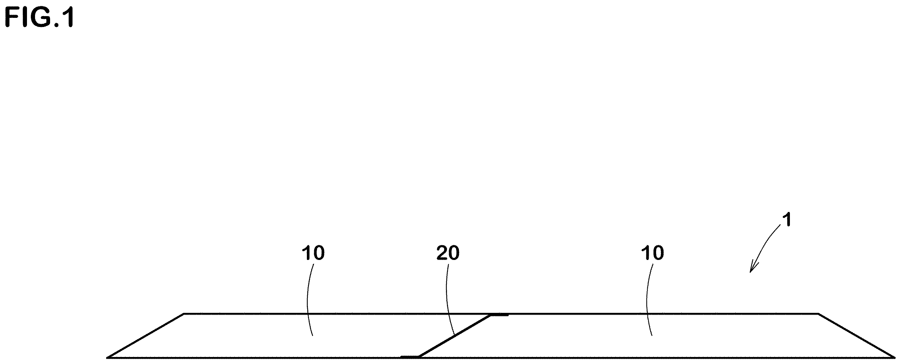

FIG. 1 shows a cross section of an annular tread rubber 1 formed by a tread rubber forming method 100 as an embodiment of the present invention, taken along a plane corresponding to a tire equatorial plane.

The tread rubber 1 forms the tread portion of the finished tire through a vulcanizing step.

The tread rubber 1 comprises a non-conductive layer 10 made of a non-conductive first rubber compound, and a conductive layer 20 made of a conductive second rubber compound.

The conductive layer 20 is formed so as to extend from the radially inner circumferential surface to the radially outer circumferential surface of the tread rubber 1, penetrating through the non-conductive layer 10.

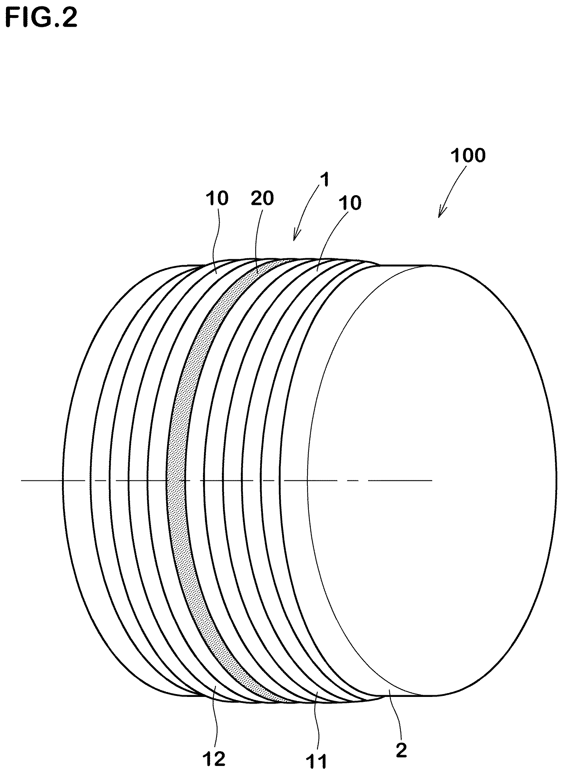

FIG. 2 is for explaining the tread rubber forming method 100 of the present embodiment.
The tread rubber forming method 100 is for forming the annular tread rubber 1 comprising the non-conductive layer 10 and the conductive layer 20.
In the drawings, the conductive layer 20 is indicated by shading with fine dots.
The non-conductive layer 10 includes a first non-conductive layer 11 on one tread edge side and a second non-conductive layer 12 on the other tread edge side.

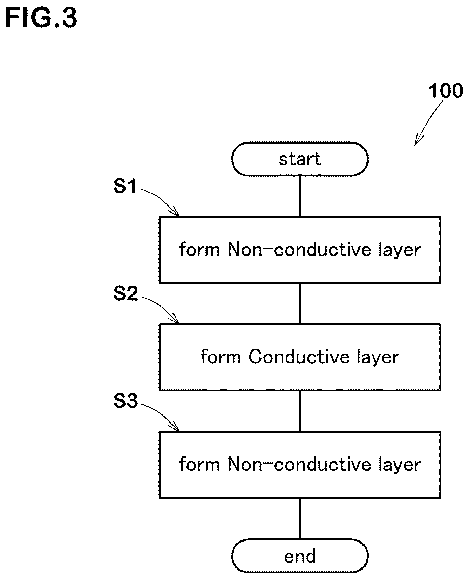

FIG. 3 is a flowchart of the tread rubber forming method 100.
The tread rubber forming method 100 comprises a first step S1 of forming the non-conductive layer 10, a second step S2 of forming the conductive layer 20, and a third step S3 of forming the non-conductive layer 10.

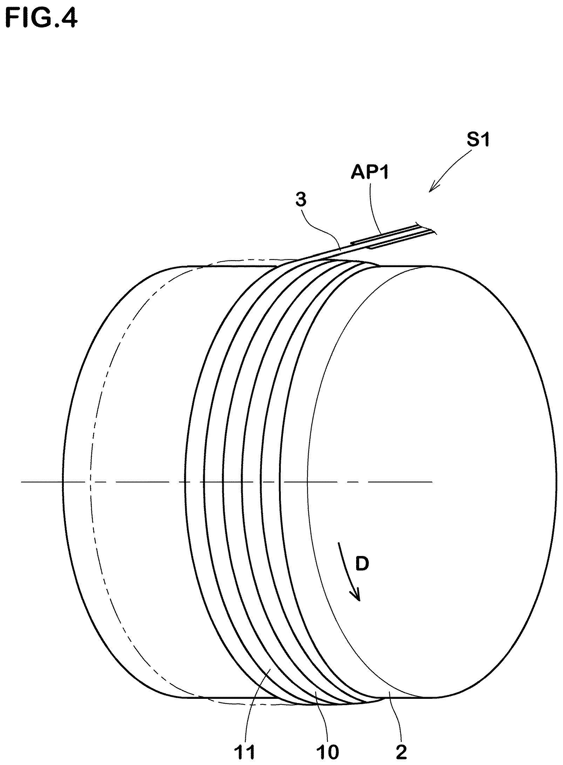

In the first step S1, as shown in FIG. 4, the non-conductive layer 10 is formed by winding a first rubber strip 3 plural turns around a cylindrical body 2 (tire building drum). The first rubber strip 3 is formed in the shape of a tape from a non-conductive rubber compound.

In addition to winding the first rubber strip 3 directly on the outer circumferential surface of the cylindrical body 2, it is also possible to wind the first rubber strip 3 on the outer circumferential surface of a tread reinforcing layer such as a belt layer formed on the outer circumferential surface of the cylindrical body 2.
In this case, the first rubber strip 3 is wound indirectly around the cylindrical body 2 via the reinforcing layer.
The same applies to the second rubber strip 4, which will be described later.

The cylindrical body 2 is configured to be rotatable around its axis.

The non-conductive rubber compound constituting the first rubber strip 3 is, for example, a silica-rich rubber compound containing a large amount of silica instead of carbon black as a reinforcing agent, and thus, having non or less conductivity.
Such silica-rich rubber compound is excellent in fuel economy and wet performance as well known in the art.
The first rubber strip 3 is applied using a first applicator AP1 which is movable relative to the cylindrical body 2 in the axial direction thereof.

In this application, when a material having rubber-like elasticity after vulcanized or cured has a volume resistivity of 100 Mega ohms or higher, such material is treated as non-conductive.
The volume resistivity can be measured with an electric resistance measuring device, for example, using a specimen having a size of 15cm x 15cm x 2 mm under conditions of an applied voltage of 500 V, an air temperature of 25 degrees C. and a humidity of 50%.

The first step S1 in this embodiment is for forming the first non-conductive layer 11 on the side of one of the tread edges.
In the first step S1, the non-conductive first rubber strip 3 is wound from the one of the tread edges to a position midway from the one of the tread edges to the other of the tread edges, for example, to the center of the tread rubber 1.
By forming the non-conductive layer 10 form such first rubber strip 3 so as to constitute major portion of the tread rubber 1, it becomes possible to improve the fuel efficiency and wet performance of the finished tire.

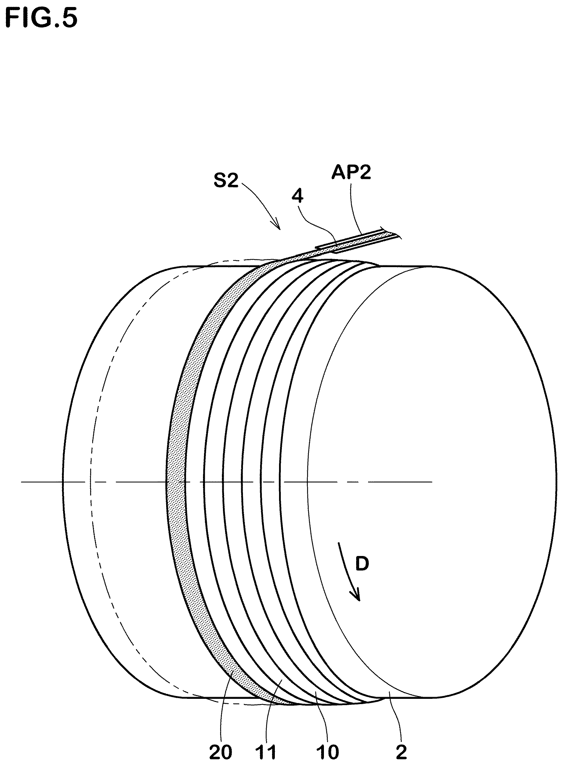

The second step S2 is carried out after the first step S1.
In the second step S2, as shown in FIG. 5, the conductive layer 20 is formed by winding a second rubber strip 4 around the cylindrical body 2 for at least one turn so as to overlap a portion of the first rubber strip 3 (the axial end portion in this example).
The second rubber strip 4 is formed in the shape of a tape from a conductive rubber compound.
The second rubber strip 4 is wound around the cylindrical body 2 in parallel to the circumferential direction of the cylindrical body 2.
In view of wear resistance and the like, it is preferable to limit the winding of the second rubber strip 4 to one turn.

The conductive rubber compound of the second rubber strip 4 is a carbon-rich rubber compound containing a large amount of carbon black as a reinforcing agent. Generally, such carbon-rich rubber has conductivity.
In this application, when a material having rubber-like elasticity after vulcanized or cured has a volume resistivity of 10 Mega ohms or lower, such material is treated as conductive.
The second rubber strip 4 is applied using a second applicator AP2 which is movable relative to the cylindrical body 2 in the axial direction thereof.

In the second step S2, the conductive second rubber strip 4 is wound for at least one turn so as to form a conductive path which is continuous in the tire circumferential direction at least once around the tire.
With such conductive path, static electricity built up in the vehicle and tire can be effectively discharged.

The width of the first rubber strip 3 and the width of the second rubber strip 4 are not particularly limited and can be determined taking into consideration the production efficiency of the tread rubber 1, the uniformity of the finished tire, etc.
The width of the first rubber strip 3 and the width of the second rubber strip 4 may be equal to or different from each other.

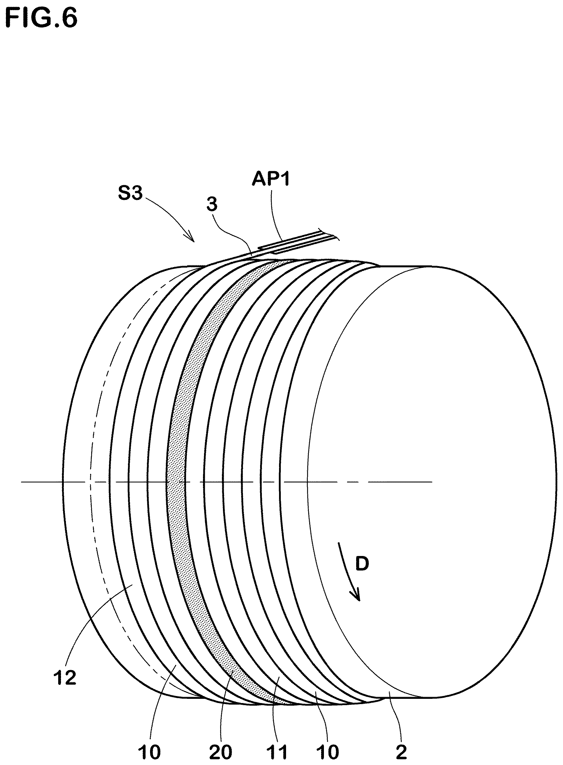

FIG. 6 shows the third step S3.
The third step S3 is carried out after the second step S2.
In the third step S3, the second non-conductive layer 12 on the other tread edge side is formed.

The third step S3 is for forming the non-conductive layer 10 by winding the first rubber strip 3 around the cylindrical body 2 for plural turns so as to overlap a portion of the second rubber strip 4 (the axial end portion in this example).
More specifically, the non-conductive first rubber strip 3 is wound to the other of the tread edges from the position next to the second rubber strip 4 so that the second rubber strip 4 is exposed to the outside in the outer surface of the tread rubber 1 for at least one turn.

By performing the winding of the first rubber strip 3 in two stages in the first step S1 and the third step S3 before and after the second step S2, it is possible to easily position the conductive layer 20 at any desired axial position of the tread rubber 1 (for example, a center position avoiding the position of an existing circumferential groove). As a result, even if a slip angle or camber angle is applied to the tire during running, the conductive layer 20 can easily contact the ground, and it becomes possible to easily increase the discharge effect.

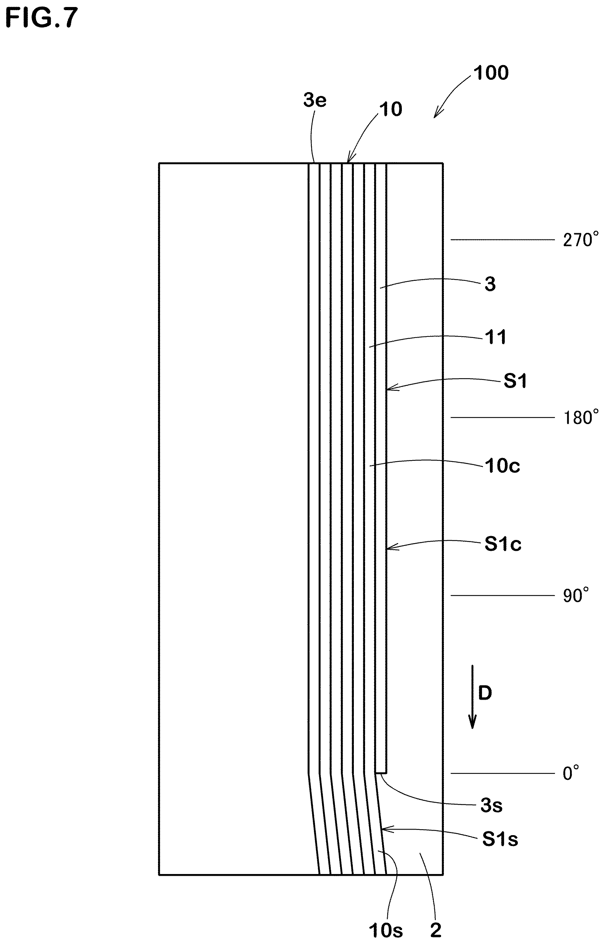

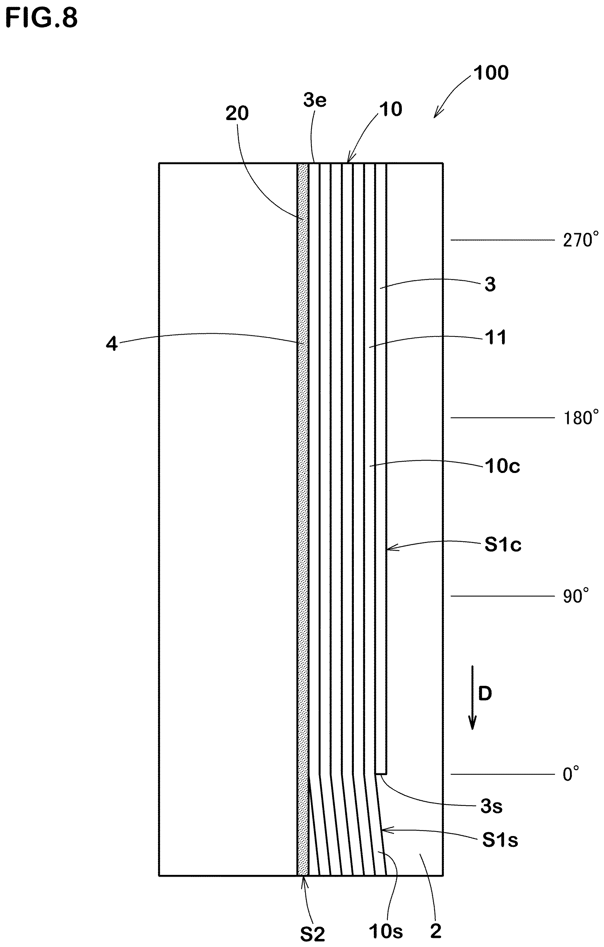

FIG. 7 is a development view for explaining how the first rubber strip 3 is wound in the first step S1.
In this figure, rotation angles around the axis of the cylindrical body 2 is developed in the vertical direction, and lengths in the axial direction of the cylindrical body 2 are shown in the horizontal direction.
The same applies to the development views of FIG. 8 and subsequent figures.

In FIG. 7, the first rubber strip 3 is wound, starting from a winding start position 3s at one of the tread edges and ending at a winding stop position 3e in the center of the ground contacting surface.

The winding start position 3s of the first rubber strip 3 may be located at any position in the axial direction of the tread rubber 1, and the winding stop position 3e may be located at the tread edge.

The first step S1 includes a circumferential winding step S1c and an oblique winding step S1s.
The circumferential winding step S1c and the oblique winding step S1s are carried out during making each one turn of the plural turns in the first step S1.

In the circumferential winding step S1c, the first rubber strip 3 is wound in parallel to the circumferential direction of the cylindrical body 2, and a circumferential segment 10c of the first rubber strip 3 is formed in the non-conductive layer 10.
In the circumferential winding step S1c, the first rubber strip 3 is wound by at least 3/4 of the one turn (i.e., a rotation angle of at least 270 degrees around the axis of the cylindrical body 2).
In the circumferential winding step S1c, while rotating the cylindrical body 2, the first rubber strip 3 is wound around the cylindrical body 2 at a fixed position in the axial direction, and thereby, the circumferential segment 10c is formed.

The oblique winding step S1s is carried out, following the circumferential winding step S1c.
In the oblique winding step S1s, the first rubber strip 3 is wound around the cylindrical body 2 while inclining with respect to the circumferential direction of the cylindrical body 2, and thereby, an oblique segment 10s of the first rubber strip 3 is formed in the non-conductive layer 10.
In the oblique winding step S1s, while rotating the cylindrical body 2 and also moving the strip apply position in the axial direction relatively to the cylindrical body 2, the first rubber strip 3 is wound, and the oblique segment 10s is formed.

In the oblique winding step S1s, the movement in the axial direction of the first rubber strip 3 during applying the first rubber strip 3 for one oblique segment 10s, is less than or equal to the width of the first rubber strip 3.
By changing the amount of the movement, the contour of the tread rubber 1 may be adjusted to the desired one.

For convenience sake, FIG. 7 illustrate the amount of movement of the first rubber strip 3 as being equal to the width of the first rubber strip 3.
But, the amount of movement can be smaller than the width of the first rubber strip 3. The same applies to the development views of FIG. 8 and subsequent figures.

In the oblique winding step S1s, the remaining portion of the one turn of the first rubber strip 3 (namely, at most 1/4 portion of the one turn when the circumferential segment is at least 3/4 portion of the one turn) is formed.
Thus, the one turn of the first rubber strip 3 is formed from the oblique segment 10s formed by the oblique winding step S1s and the circumferential segment 10c formed by the circumferential winding step S1c.

After the oblique winding step S1s, the circumferential winding step S1c for the next turn is carried out.
That is, by alternately repeating the circumferential winding step S1c and the oblique winding step S1s, the first rubber strip 3 is wound plural turns, and the non-conductive layer 10 in which the first rubber strip 3 extends in the axial direction is formed.

Since the circumferential segments 10c formed by carrying out the circumferential winding steps S1c do not include axial components, it becomes easy to wind the first rubber strip 3 so as to accurately fit the designed contour of the tread rubber 1 without being disturbed by axial components.

On the other hand, the oblique segments 10s including axial components are positioned in a limited portion in the circumferential direction of the tread rubber 1.
As a result, when viewed the tread rubber 1 as a whole, the circumferential segments 10c become dominant, and it becomes possible to easily and accurately wind the first rubber strip 3 to fit the desired contour .

FIG. 8 is a development view for explaining how the second rubber strip 4 is wound in the second step S2.
In the second step S2 of the tread rubber forming method 100 according to the present invention, the conductive second rubber strip 4 is wound in parallel to the circumferential segments 10c. The wound second rubber strip 4 does not include an axial component like the circumferential segments 10c. Thus, the second rubber strip 4 can be accurately wound so as to fit the designed contour of the tread rubber 1.

As a result, the tread rubber forming method 100 can form the tread rubber 1 with high precision from the non-conductive first rubber strip 3 and the conductive second rubber strip 4.

From the viewpoint of forming the tread rubber 1 with precision, it is preferred that the circumferential winding step S1c is configured to form at least 7/8 portion of the one turn around the cylindrical body 2 (i.e., a rotation angle of at least 315 degrees around the axis of cylindrical body 2).

Further, from the viewpoint of the uniformity of the finished tire, it is desirable that the circumferential winding step S1c is configured to form at most 15/16 portion of the one turn around the cylindrical body 2 although this depends on the width of the first rubber strip 3.

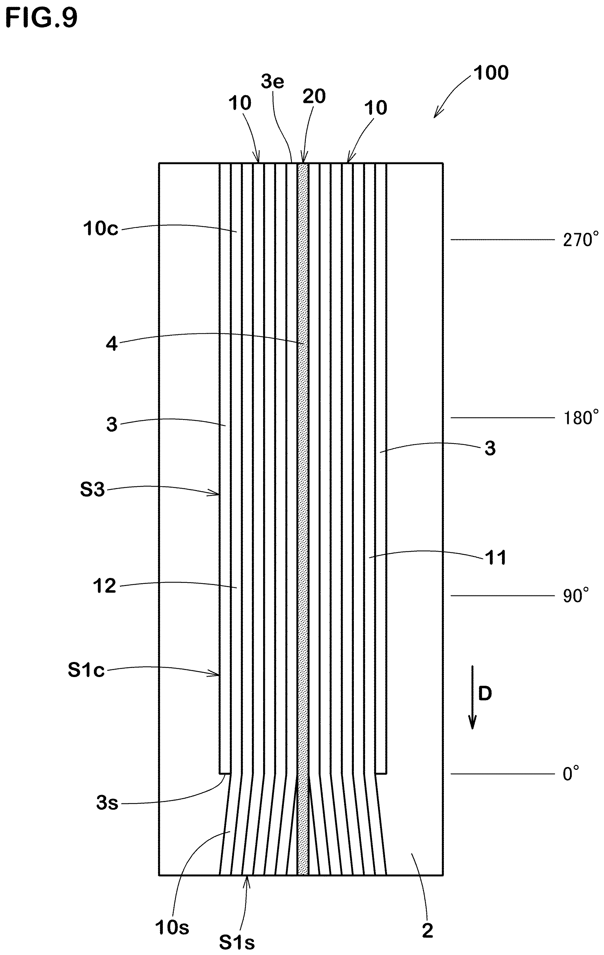

FIG. 9 is a development view for explaining how the first rubber strip 3 is wound in the third step S3 after the second step S2.
The method of winding the first rubber strip 3 in the third step S3 is approximately the same as that in the first step S1.

The third step S3 includes a circumferential winding step S1c and an oblique winding step S1s.
The circumferential winding step S1c and the oblique winding step S1s of the third step S3 are similar to the circumferential winding step S1c and the oblique winding step S1s of the first step S1.
During making each one turn of the plural turns in the third step S3, the circumferential winding step S1c and the oblique winding step S1s are carried out. Thereby, the circumferential segments 10c and the oblique segments 10s are formed in the second non-conductive layer 12.

As shown in FIG. 9, the circumferential segments 10c of the first non-conductive layer 11 and the circumferential segments 10c of the second non-conductive layer 12 are arranged in the same phase in a rotational direction of the cylindrical body 2. Further, the oblique segments 10s of the first non-conductive layer 11 and the oblique segments 10s of the second non-conductive layer 12 are arranged in the same phase in the rotational direction of the cylindrical body 2.

Here, the phase is defined as the rotation angle around the axis of the cylindrical body 2 from a reference position (for example, the winding start position 3s of the first rubber strip 3), and the same phase means that the rotation angle from the reference position of the cylindrical body 2 is the same.

For example, in FIGS. 8 and 9, since the rotation angle around the cylindrical body 2 is developed in the vertical direction, the circumferential segments 10c of the first non-conductive layer 11 and the circumferential segments 10c of the second non-conductive layer 12 are shown to be located at the same position in the vertical direction.

In the tread rubber forming method 100, the circumferential segments 10c of the first non-conductive layer 11, the circumferential segments 10c of the second non-conductive layer 12, and the second rubber strip 4 are all arranged in parallel to the circumferential direction of the cylindrical body 2.
Therefore, the circumferential segments 10c of the first non-conductive layer 11, the circumferential segments 10c of the second non-conductive layer 12, and the second rubber strip 4 do not include any axial components. As a result, the strips can be wound with high precision so as to fit the designed contour of the tread rubber 1.

The oblique segments 10s of the first non-conductive layer 11 and the oblique segments 10s of the second non-conductive layer 12 are arranged in the same phase in the rotational direction of the cylindrical body 2, and the oblique segments 10s are positioned only in a limited position in the circumferential direction of the tread rubber 1. Therefore, when the tread rubber 1 is considered as a whole, it is possible to easily and accurately wind the first rubber strip 3 to have the desired contour .

In the oblique segments 10s shown in FIGS. 7 and 9, there is a position where the first rubber strip 3 does not exist.
In order to prevent deterioration of uniformity due to such partially light weight position, it may be possible to make such position coincide with a position where there is excess material such as a joint position of other tire components (for example, sidewall rubber).

It is preferable that the oblique segments 10s of the first non-conductive layer 11 and the oblique segments 10s of the second non-conductive layer 12 are inclined in opposite directions to each other.
More specifically, toward the rotating direction D of the cylindrical body 2, the oblique segments 10s of the first non-conductive layer 11 are inclined to one side in the axial direction, and the oblique segments 10s of the second non-conductive layer 12 are inclined to the other side in the axial direction.

In the example shown in FIG. 9, the oblique segments 10s of the first non-conductive layer 11 and the oblique segments 10s of the second non-conductive layer 12 are inclined to the respective outer sides in the axial direction toward the rotating direction D of the cylindrical body 2.

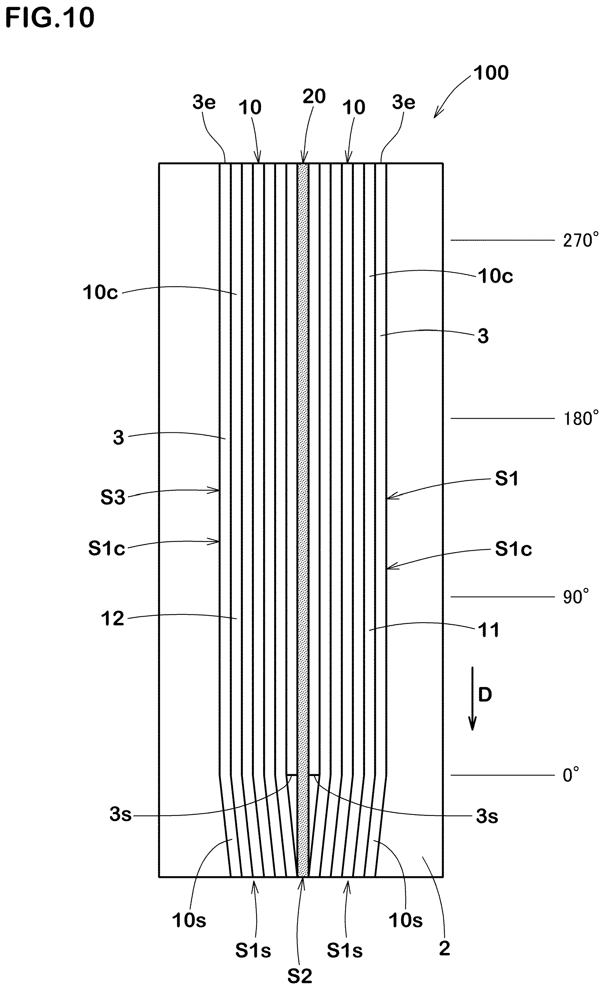

FIG. 10 shows another example in which the oblique segments 10s of the first non-conductive layer 11 and the oblique segments 10s of the second non-conductive layer 12 are inclined to the respective inner sides in the axial direction toward the rotating direction D of the cylindrical body 2.

The oblique segments 10s of each of the examples shown in FIGS. 9 and 10 can offset the structural imbalance between the oblique segments 10s of the first non-conductive layer 11 and the oblique segments 10s of the second non-conductive layer 12. This may improve the conicity and lateral force variation of the finished tire.

Nonetheless, the oblique segments 10s of the first non-conductive layer 11 and the oblique segments 10s of the second non-conductive layer 12 may be inclined in the same direction.

It is preferable that, as shown in FIGS. 7 to 10, the winding start position 3s or the winding stop position 3e of the first rubber strip 3, and circumferential ends of the respective oblique segments 10s are arranged in the same phase in the rotational direction of the cylindrical body 2.
This can be said that the winding start position 3s or the winding stop position 3e of the first rubber strip 3, and circumferential ends of the respective circumferential segments 10c are arranged in the same phase in the rotational direction of the cylindrical body 2 since the circumferential segments 10c and the oblique segments 10s are formed continuously in the present invention.
By adopting such arrangement, the first step S1 (and third step S3) can be easily carried out, and it becomes possible to improve the uniformity of the finished tire.

In addition, the winding start position 3s and the winding stop position 3e of the first rubber strip 3 can be located at positions corresponding to midway positions of the oblique segments 10s, rather than at positions corresponding to the circumferential ends of the oblique segments 10s.
Likewise, the winding start position 3s and the winding stop position 3e of the first rubber strip 3 can be located at positions corresponding to intermediate positions of the circumferential segments 10c, rather than at positions corresponding to the circumferential ends of the circumferential segments 10c.

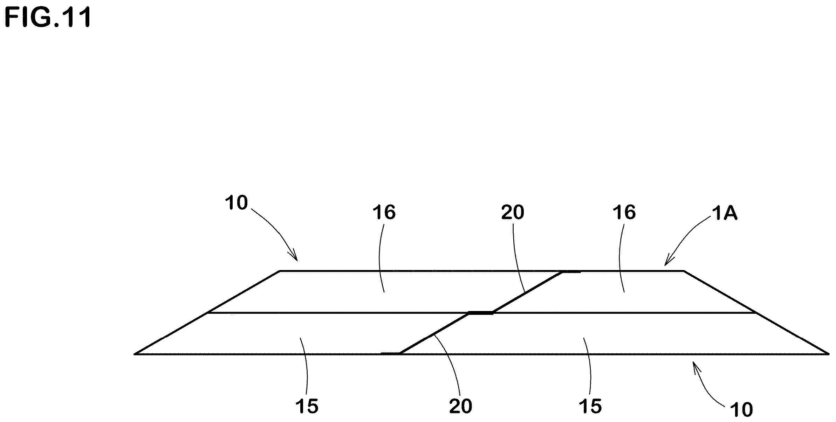

FIG. 11 shows a schematic cross-sectional view of a tread rubber 1A as a modification of the tread rubber 1 shown in FIG. 1, taken along a plane corresponding to a tire equatorial plane.
The tread rubber 1A comprises the non-conductive layer 10 which in this example includes a base tread rubber layer 15.
For anything not described below regarding the tread rubber 1A, what has been described above regarding the tread rubber 1A may be applied.

The base tread rubber layer 15 in this example is made of a rubber compound comprising not less than 70% by mass of silica and not more than 10% by mass of carbon black with respect to the total reinforcing agent in order that the base tread rubber layer 15 contributes to reducing the rolling resistance and improving the highspeed durability of the finished tire.
For example, the base tread rubber layer 15 is disposed on the radially outer side of a reinforcing cord layer for reinforcing the tread portion such as a belt layer and a band layer.

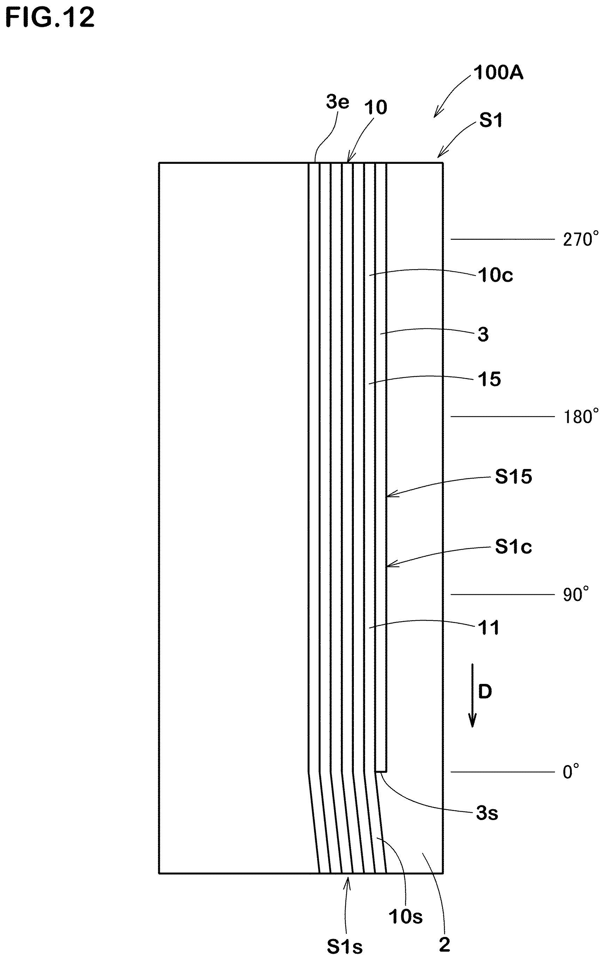

The base tread rubber layer 15 constituting a part of the non-conductive layer 10, and a radially inner part of the conductive layer 20 can be formed, for example, as shown in FIGS. 12 to 17.

FIGS. 12 to 17 are for explaining a tread rubber forming method 100A as a modification of the tread rubber forming method 100.
The tread rubber forming method 100A is for forming the tread rubber 1A.
For anything not described below regarding the tread rubber forming method 100A, what has been described above regarding the tread rubber forming method 100 may be applied.

FIG. 12-14 shows the steps of forming the base tread rubber layer 15 constituting a radially inner part of the non-conductive layer 10, and a radially inner part of the conductive layer 20.

FIG. 12 illustrates the first step S15 of forming the base tread rubber layer 15 on the side of one of the tread edges.
In the first step S15, in order to form such base tread rubber layer 15, the first rubber strip 3 is wound around the cylindrical body 2.

The first step S15 includes the circumferential winding step S1c and the oblique winding step S1s, similarly to the first step S1 of the tread rubber forming method 100 described above.

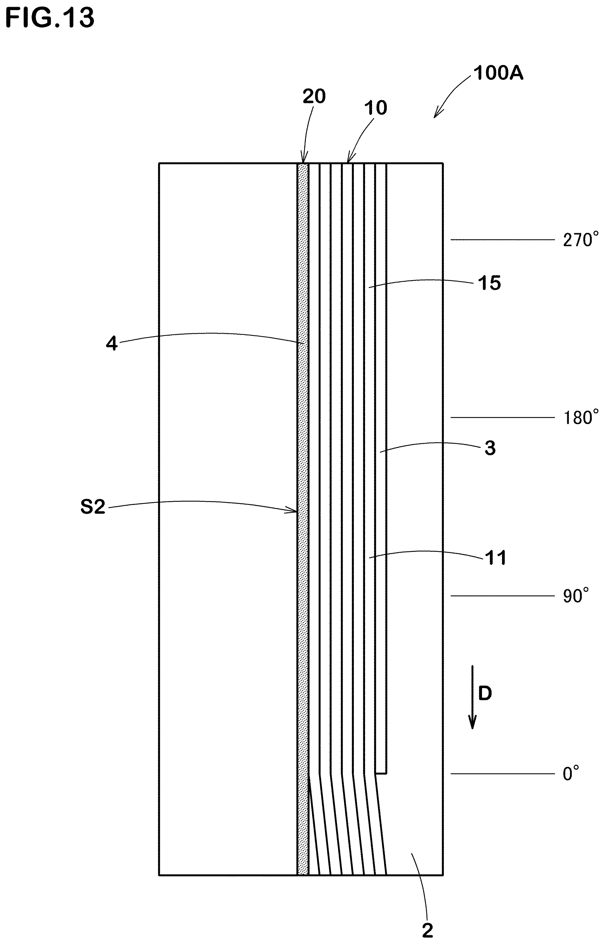

FIG. 13 illustrates the second step S2, in which the conductive layer 20 is formed closely to an inner edge in the widthwise direction of the base tread rubber layer 15. In the second step S2, the conductive second rubber strip 4 is wound so that the conductive layer 20 extends from the inner circumferential surface to the outer circumferential surface of the base tread rubber layer 15 similarly to the second step S2 of the tread rubber forming method 100.

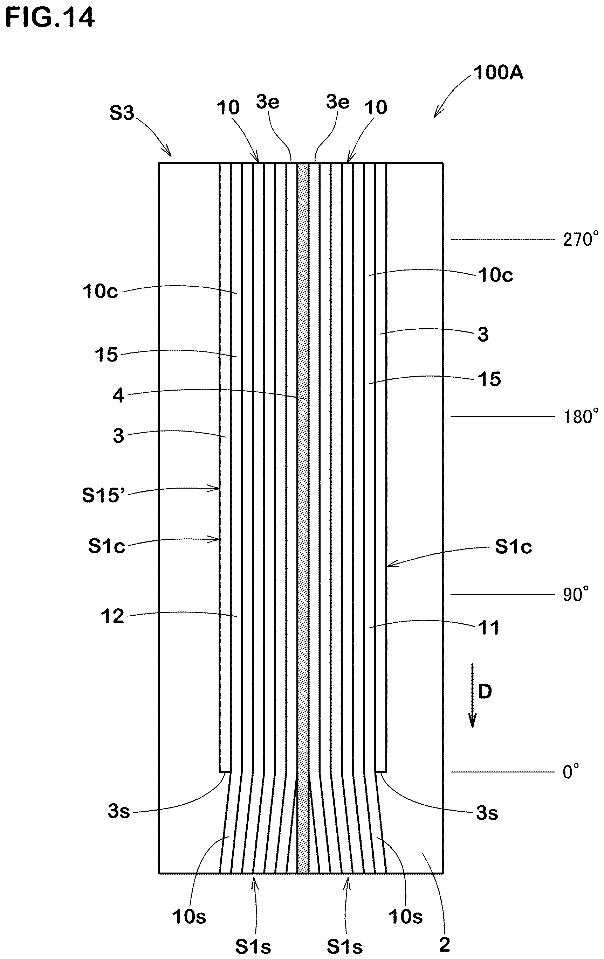

FIG. 14 illustrates the third step S15' of forming the base tread rubber layer 15 on the side of the other of the tread edges.
In third step S15', in order to form such base tread rubber layer 15, the first rubber strip 3 is wound around the cylindrical body 2 from an edge in the widthwise direction, of the conductive layer 20.

The third step S15' includes the circumferential winding step S1c and the oblique winding step S1s similarly to the third step S3 of the tread rubber forming method 100.

In the tread rubber 1A in this example, as shown in FIG. 11, the non-conductive layer 10 further includes a cap tread rubber layer 16.
The cap tread rubber layer 16 is formed radially outside the base tread rubber layer 15 after the base tread rubber layer 15 having been formed.
In this example, the cap tread rubber layer 16 is made of a rubber compound which has excellent grip performance and abrasion resistance and which is different from that of the base tread rubber layer 15.

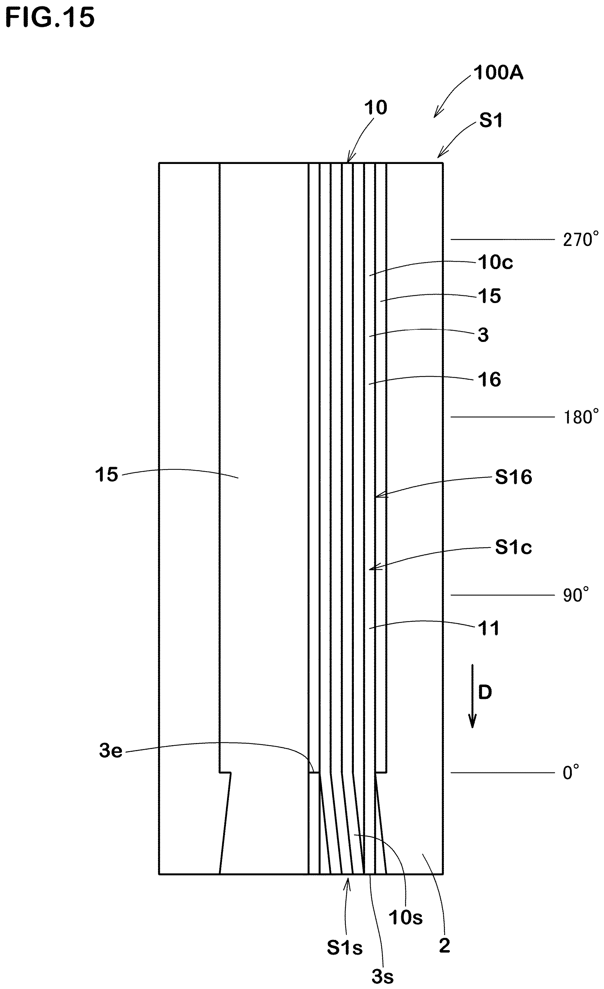

The cap tread rubber layer 16 constituting a radially outer part of the non-conductive layer 10, and a radially outer part of the conductive layer 20 can be formed as shown in FIGS. 15 to 17.

FIGS. 15 to 17 show the steps of forming the cap tread rubber layer 16 and a radially outer part of the conductive layer 20.

FIG. 15 illustrates the first step S16 of forming the cap tread rubber layer 16 on the side of one of the tread edges.
In the first step S16, in order to form such cap tread rubber layer 16, the first rubber strip 3 is wound around the radially outer side of the base tread rubber layer 15 on the side of one of the tread edges.

The first step S16 includes the circumferential winding step S1c and the oblique winding step S1s, similarly to the first step S1 of the tread rubber forming method 100.

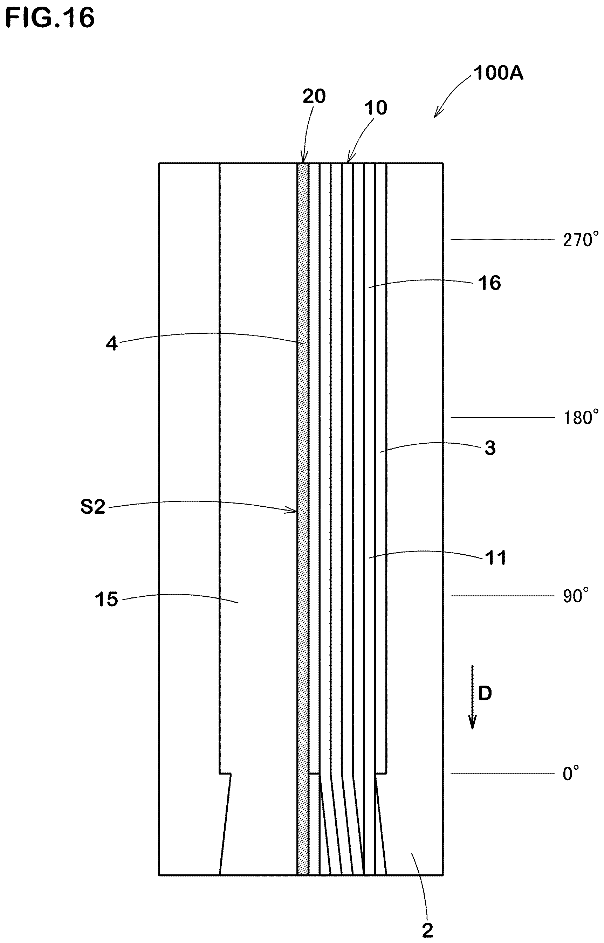

FIG. 16 illustrates the second step S2, in which the conductive layer 20 is formed closely to an edge in the widthwise direction, of the cap tread rubber layer 16 on the side of one of the tread edges.
In the second step S2, the conductive second rubber strip 4 is wound so that the conductive layer 20 extends from the inner circumferential surface to the outer circumferential surface of the cap tread rubber layer 16 similarly to the second step S2 of the tread rubber forming method 100.
The radially inner part of the conductive layer 20 and the radially outer part of the conductive layer 20 are in contact with each other or continuous.
Thus, there is formed the conductive layer 20 continuous from the inner circumferential surface of the base tread rubber layer 15 to the outer circumferential surface of the cap tread rubber layer 16.

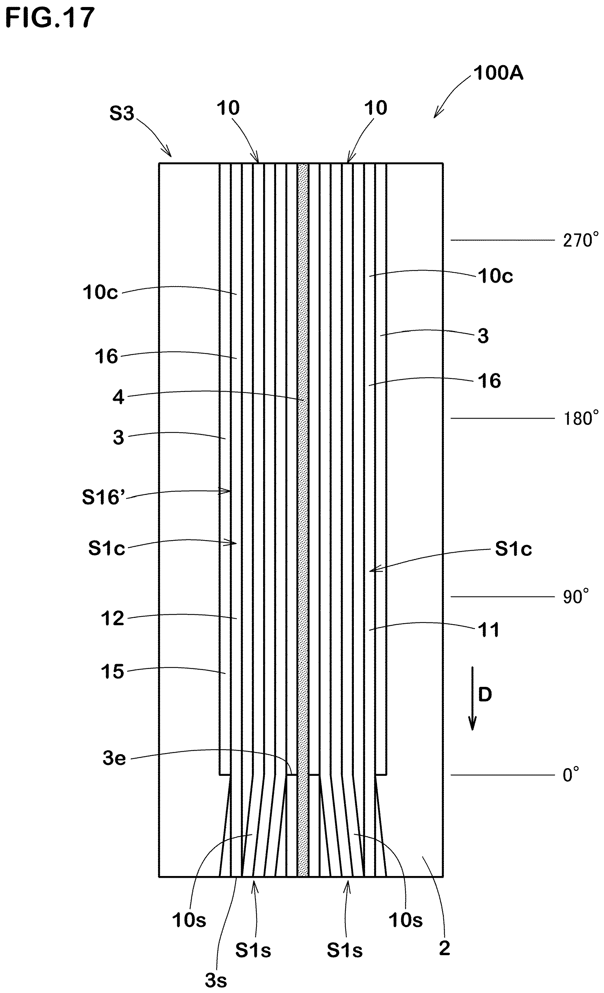

FIG. 17 illustrates the third step S16' of forming the cap tread rubber layer 16 on the side of the other of the tread edges.
In the third step S16', in order to form such cap tread rubber layer 16, the first rubber strip 3 is wound around the cylindrical body 2 from an edge in the widthwise direction, of the conductive layer 20.

The third step S16' includes the circumferential winding step S1c and the oblique winding step S1s, similarly to the first step S1 of the tread rubber forming method 100.

In the tread rubber forming method 100A, it is desirable that the circumferential segments 10c of the base tread rubber layer 15 and the circumferential segments 10c of the cap tread rubber layer 16 are arranged in the same phase in the rotational direction of the cylindrical body 2..
As a result, the circumferential segments 10c of the base tread rubber layer 15, the circumferential segments 10c of the cap tread rubber layer 16, and the wound second rubber strip 4 which do not include axial components, become dominant, and it becomes possible to accurately wind the strips 3 and 4 to fit the designed intended contour of the tread rubber 1A.

Further, the oblique segments 10s of the base tread rubber layer 15 and the oblique segments 10s of the cap tread rubber layer 16 are arranged in the same phase in the rotational direction of the cylindrical body 2., and are positioned only in a limited position in the circumferential direction of the tread rubber 1A.
Therefore, when the tread rubber 1A is viewed as a whole, it becomes possible to wind the rubber strip with high precision so as to achieve the desired contour .

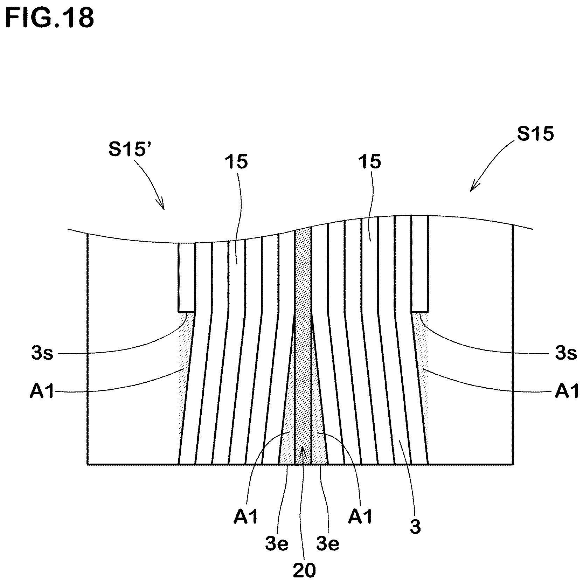

FIG. 18 is an enlarged development view showing an area around the winding start positions 3s and the winding stop positions 3e of the base tread rubber layer 15 shown in FIG. 14.
As shown in FIG. 18, in the vicinity of each of the winding start positions 3s and the winding stop positions 3e of the first rubber strips 3 constituting the base tread rubber layers 15 on both sides, there exists an area A1 where the first rubber strip 3 is short in volume.

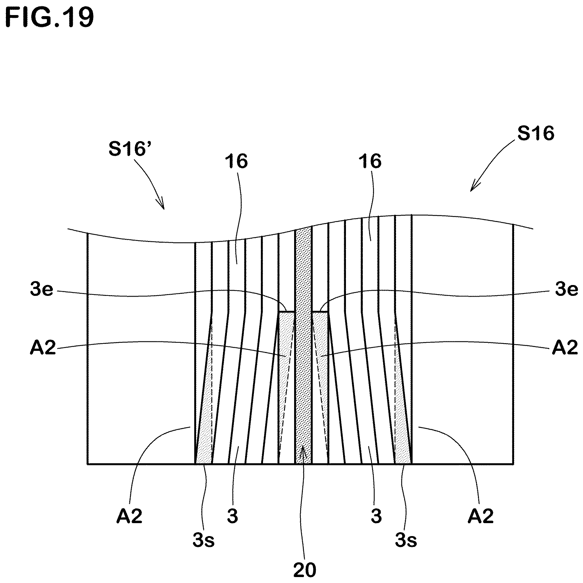

FIG. 19 is an enlarged development view showing an area around the winding start positions 3s and the winding stop positions 3e of the cap tread rubber layer 16 shown in FIG. 17.

In this example, the winding start position 3s and the winding stop position 3e of each first rubber strip 3 are arranged so that the circumferential segment 10c and the oblique segment 10s of the strip 3 partially overlap each other as shown in FIG. 19. Specifically, when winding from the winding start position 3s, the first circumferential segment 10c is formed over 100% of one turn, and then the subsequent oblique segment 10s is formed. And when the winding is stopped at the winding stop position 3e, the last circumferential segment 10c is formed over 100% of one turn.

As shown in FIG. 19, in the vicinity of each of the winding start position 3s and winding stop position 3e of the first rubber strip 3 constituting the cap tread rubber layer 16 on each side, there is an area A2 where the first rubber strip 3 becomes excess in volume due to the overlap between the circumferential segment 10c and the oblique segment 10s.

By winding the respective first rubber strips 3 so that the oblique segments 10s of the base tread rubber layer 15 and the oblique segments 10s of the cap tread rubber layer 16 are arranged in the same phase in the rotational direction of the cylindrical body 2., it becomes possible to make the areas A1 are respectively positioned adjacently to the areas A2 with respect to the circumferential direction.
Thereby, the volume deficiency in the areas A1 and the volume excess in the areas A2 are offset, and rubber flow occurs during the vulcanizing step. As a result, the tread rubber 1A having excellent uniformity, for example of the thickness, in the circumferential and axial directions can be formed.

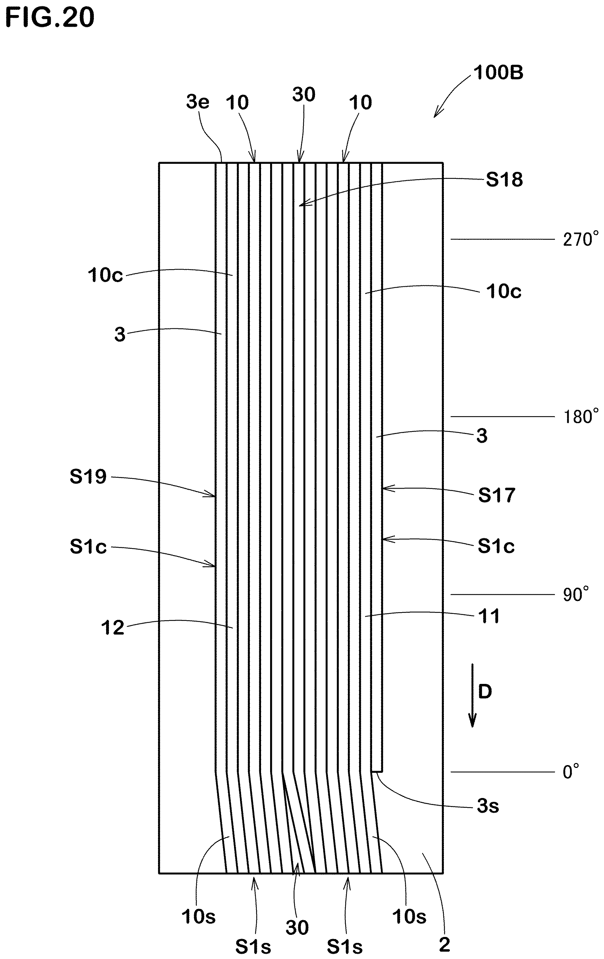

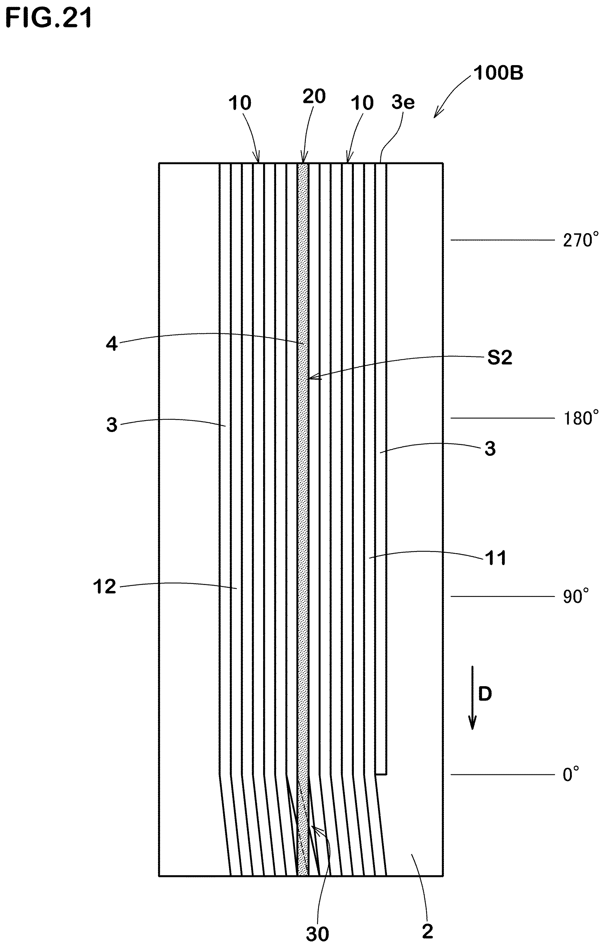

FIGS. 20 and 21 are for explaining a tread rubber forming method 100B as a modification of the tread rubber forming method 100A.
This tread rubber forming method 100B is for forming the base tread rubber layer 15. For anything not described below regarding the tread rubber forming method 100B, what has been described above regarding the tread rubber forming method 100A may be applied.

As shown in FIG. 20, in tread rubber forming method 100B, the base tread rubber layer 15 is formed in the first step S1
by executing a step S17 of forming the first non-conductive layer 11, and thereafter, a step S18, and then a step S19 of forming the second non-conductive layer 12.

The step S18 includes a step of helically winding the first rubber strip 3 which has been wound as the first non-conductive layer 11, without cutting it, and bringing it to the second non-conductive layer 12 spaced apart from the layer 11 via a gap 30.
The gap 30 is formed by increasing the movement in the axial direction of the first rubber strip 3 when being wound as an oblique segment 10s.

In the tread rubber forming method 100B, the first non-conductive layer 11, the gap 30 and the second non-conductive layer 12 is formed in a series of the steps S17, S18 and S19, contributing to improvement of the production efficiency of the tread rubber 1.

Then, as shown in FIG. 21, the second rubber strip 4 is wound to form the conductive layer 20 in the axial position where the gap 30 exists.
The winding of the second rubber strip 4 is the same as that of the second step S2 shown in FIG. 9, namely, the second step S2 is carried out to form the conductive layer 20.

In the tread rubber forming method 100B, it is possible to start winding of the second rubber strip 4 immediately after the gap 30 is formed in the step S18.
In other words, the step S19 and the second step S2 can be carried out simultaneously or partially in a time-overlapping manner. This makes it possible to improve the production efficiency.

In the previously described tread rubber forming method 100A, instead of the first step S15 (FIG. 12) and the third step S15' (Fig. 14), the first step S1 and the third step S3 shown in FIG. 10 may be employed in order to form the base tread rubber layer 15. Further, in stead of the first step S16 (FIG. 15) and the third step S16' (FIG. 17), the first step S1 and the third step S3 shown in FIG. 10 may be employed in order to form the cap tread rubber layer 16.

While detailed description has been made of preferable embodiments of the tread rubber forming method according to the present invention, the present invention may be embodied in various forms without being limited to the illustrated embodiments.

### Description of the reference signs

1: tread rubber
1A: tread rubber
2: cylindrical body
3: first rubber strip
3e: winding stop position
3s: winding stat position
4: second rubber strip
10: non-conductive layer
10c: circumferential segment
10s: oblique segment
15: base tread rubber layer
16: cap tread rubber layer
20: conductive layer
100: tread rubber forming method
100A: tread rubber forming method
100B: tread rubber forming method
D: rotating direction
S1: first step
S1c: circumferential winding step
S1s: oblique winding step
S2: second step
S3: third step
S15: first step
S15': third step
S16: first step
S16': third step

## Claims

1. A tread rubber forming method comprising:
a first step of forming a non-conductive layer by winding
a non-conductive first rubber strip in the shape of a tape, around a cylindrical body for plural turns;
a second step of forming a conductive layer after the first step, by winding a conductive second rubber strip in the shape of a tape, around the cylindrical body for at least one turn, in parallel to the circumferential direction of the cylindrical body so as to overlap a portion of the first rubber strip ; and
a third step of forming a non-conductive layer after the second step, by winding the first rubber strip around the cylindrical body for plural turns so as to overlap a portion of the second rubber strip ,
wherein
each of the first step and the third step includes, when making each one turn of the plural turns,
a circumferential winding step in which the first rubber strip is wound in parallel to the circumferential direction of the cylindrical body by at least 3/4 of the one turn to form a circumferential segment constituting a portion of the one turn, and
an oblique winding step in which the first rubber strip is wound obliquely to the circumferential direction of the cylindrical body to form an oblique segment constituting the remaining portion of the one turn.

2. The tread rubber forming method according to claim 1, wherein, in the circumferential winding step, the first rubber strip is wound by at least 7/8 of the one turn.

3. The tread rubber forming method according to claim 1 or 2, wherein the circumferential segments wound in the first step and the circumferential segments wound in the third step are arranged in the same phase in a rotational direction of the cylindrical body.

4. The tread rubber forming method according to claim 1, 2 or 3, wherein the oblique segments wound in the first step and the oblique segments wound in the third step are inclined to opposite directions to each other.

5. The tread rubber forming method according to claim 1, 2 or 3, wherein the oblique segments wound in the first step and the oblique segments wound in the third step are inclined in the same direction as each other.

6. The tread rubber forming method according to claim 1, 2, 3, 4 or 5 wherein a winding start position or a winding stop position of the first rubber strip and circumferential ends of the oblique segments are arranged in the same phase in the rotational direction of the cylindrical body.

7. The tread rubber forming method according to any one of claims 1 to 6, wherein the non-conductive layer includes a base tread rubber layer made of a rubber compound comprising 10% by mass of carbon black with respect to the total reinforcing agent of the rubber compound.

8. The tread rubber forming method according to claim 7, wherein the non-conductive layer includes a cap tread rubber layer wound on the radially outside of the base tread rubber layer, and
the cap tread rubber layer is made of a rubber compound different from that of the base tread rubber layer.

9. The tread rubber forming method according to claim 8, wherein the circumferential segments of the base tread rubber layer and the circumferential segments of the cap tread rubber layer are arranged in the same phase in the rotational direction of the cylindrical body.

10. The tread rubber forming method according to claim 9, wherein the oblique segments of the base tread rubber layer and the oblique segments of the cap tread rubber layer are inclined to opposite directions to each other.
